(19) Europäisches Patentamt / European Patent Office / Office européen des brevets

(11) **EP 2 712 373 B1**

(12) **EUROPEAN PATENT SPECIFICATION**

(45) Date of publication and mention
of the grant of the patent:
**01.03.2017 Bulletin 2017/09**

(21) Application number: **12733541.2**

(22) Date of filing: **08.05.2012**

(51) Int Cl.:
*E01F 9/30* (2016.01)          *E01F 9/608* (2016.01)

(86) International application number:
**PCT/SE2012/050486**

(87) International publication number:
**WO 2012/154117 (15.11.2012 Gazette 2012/46)**

(54) **ROAD INFORMATION PROVISION DEVICE AND METHOD PROVIDING ENHANCED SAFETY**

VORRICHTUNG UND VERFAHREN ZUR BEREITSTELLUNG VON STRASSENINFORMATIONEN FÜR ERHÖHTE SICHERHEIT

DISPOSITIF DE FOURNITURE D'INFORMATIONS ROUTIÈRES ET PROCÉDÉ PERMETTANT UNE SÉCURITÉ AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2011 SE 1150408**

(43) Date of publication of application:
**02.04.2014 Bulletin 2014/14**

(73) Proprietor: **Sentient Sweden Ekonomisk Förening
417 56 Gothenburg (SE)**

(72) Inventors:
• **HULTÈN, Johan
S-413 16 Gothenburg (SE)**
• **POHL, Jochen
S-433 31 Partille (SE)**

(74) Representative: **Johansson, Lars E.
Hynell Patenttjänst AB
P.O. Box 138
683 23 Hagfors (SE)**

(56) References cited:
WO-A1-99/60544          DE-A1- 19 915 870
DE-U1- 29 520 819          FR-A1- 2 678 560
JP-A- 2 248 886

**Description**

Technical Field

The present invention relates to a delineator post to be used in a substantially upright position arranged at predetermined distances along edges of roads or highways, which delineator post comprise a reflector surface for reflecting visible light from passing vehicles and an information tag adapted to be visible an onboard vision system of such passing vehicles and a delineator post for provision of road information to trafficants driving along a road or a highway. The invention also relates to a method for providing such information to road trafficants.

Background of the Invention

Delineator posts for use along a road or highway are well known. Conventional delineator posts comprise an elongated vertically arranged body like for instance a tube having reflective material mounted at the upper end of the post.

WO2010/063058 discloses a delineator post carrying speed limit indicating means comprising a reflector which carries numerals representative of a speed limit to be observed on the road or highway. Prior Art delineator posts, however, carry only information that is observable to the human vision in daylight and in less bright light being observable by the aid of adding reflecting material to the information surface thereof.

WO 99/60544 to Baldinotti discloses a system which allows a driver to have information about road and environmental conditions, traffic and other elements for a safe road travelling, directly on his car, through one or more infrared sensors, or optical readers, linked to a central unit, capable of reading and interpreting especially the code bars, and signalling the message picked up by external transmitters on a console inside the car. This system, however, does not enable the required speed in processing of the available information due to the amount of necessary computer power needed in finding and detecting the available information.

DE 199 15 870 to Plaetschke discloses a solution in which passive transponders are attached to traffic signs, which transponders enter into communication with active transponders arranged in vehicles transferring information with regard to the traffic signs content along a road. This solution, however, does only constitute an indication of the state of the art at the time the present invention was made and its content is therefore of minor interest.

Thus, there is therefore a need for improving the usability/usefulness of such delineator posts. Also, there is a need for improving the interactive interface between the posts and the vehicle to be able to exchange more advanced information provided, related to each delineator post to an on board vision system of a vehicle, to thereby considerably enhance the possibility of providing advanced information to a driver and his/her vehicle.

Hence, there is a need for an improved delineator post, and more specifically to a delineator post that overcomes or at least alleviates the prior art shortcomings of delineator posts.

Summary of the Invention

In view of the above-mentioned and other drawbacks of the prior art, a general object of the present invention is to alleviate said drawbacks.

According to the invention the reflector surface and the information tag are arranged together with a radar reflector on the outer surface of the top end of the delineator post facing passing vehicles and the radar reflector on said surface is in form of a corner reflector. The delineator post has a reflector surface for reflecting visible light. Further, the delineator post comprises an information tag arranged to be visible for an on board vision system of a vehicle. Finally the delineator post also comprises a portion acting as a radar reflector. An on board vision system can be a video camera or other suitable vision system.

Such a delineator post comprising an information tag is advantageous, since it allows for transferring more detailed or advanced information from the delineator post to a passing vehicle than ever before. In addition, a radar reflector enhances detection of the delineator post and the information tag. Since the radar reflector allows for determining the position of the delineator post with high precision, the position of the information tag can also be exactly determined. The position of the delineator post and/or the information tag can be transmitted to the on board vision system of the vehicle. The knowledge of the position of the information tag allows for using less computer capacity for retrieving and interpreting the information of the information tag than else, since in most cases only a part of the range of vision of the vision system comprises the desired information. Thus, by knowing the position of the information tag the interesting part of the range of vision is also known and during image recognition only the interesting or desired part need to be decoded. In an exemplary embodiment, the radar reflector is arranged to provide a sufficient radar cross section in order to be identified from the on board radar system of the vehicle.

In an exemplary embodiment, the radar reflector is arranged to be detectable by an onboard radar having a frequency of 70-85 GHz, and preferably a frequency of 75-80 GHz

In an exemplary embodiment, the radar reflector comprises a corner reflector, having a side length of 8-18 cm.

In an exemplary embodiment, the information tag is arranged to be resolved by a vision system, and wherein a length of a side of the information tag is preferably 0.1-0.4 m.

In an exemplary embodiment, the radar reflector and vision tag are arranged at the upper end portion of the delineator post.

A radar reflector which is arranged having a distance to the ground is advantageous, since it results in a radar reflex which is easier to distinguish from its environment.

In an exemplary embodiment, the information tag is passive.

Herein, passive is intended to mean that the unit which is referred to does not need any power supply for being operable. A passive information tag is advantageous, since it does not require a battery unit, and consequently there is no requirement for changing a battery unit or other power supply. Therefore there is not a risk of the information tag not working due to a discharged battery.

According to another aspect of the invention, there is provided a road infrastructure comprising a road and a set of delineator posts having any number of the features discussed in connection with the first aspect of the invention, and the embodiments thereof.

Such a road infrastructure is advantageous since it increases the safety on the roads.

According to another aspect of the invention, there is provided a method for providing information to road trafficants. The method comprises the steps of:

- providing a reflected radar signal from a radar reflector arranged on a delineator post indicating the position of a delineator post; and
- retrieving information from an information tag positioned at a predetermined location in relation to said radar reflector on the delineator post.

Such a method is advantageous since it allows for retrieving information from the information tag of the road delineator according to the invention.

In an exemplary embodiment of the method, the information is in form of long range or short range curvature, road shoulder geometry or restrictions due to traffic rules.

In an exemplary embodiment of the method, the method comprises retrieving curve radius information from said information tag, determining an appropriate maximum speed for a vehicle at an on board electronic unit, and generating a curve over speed warning in the event a present speed of the vehicle is greater than said maximum speed.

Such a method minimizes the risk of speeding at dangerous locations and therefore increases the safety on the roads or highways.

In an exemplary embodiment of the method, the method comprises retrieving lane access information from said information tag, and generating a lane access warning in the event entry into a neighboring lane is prohibited.

Such a method further increases the road safety, since the risk of head on collisions decreased.

In an exemplary embodiment of the method, the method comprises retrieving road shoulder information from said information tag, and communicating type and dimensions of the road shoulder, the presence of infrastructure support and the type of terrain outside the shoulder.

Such a method is advantageous, since road shoulder information can be used for lane keeping and for generating warnings if there is a risk for the vehicle driving off the road. Thus, road safety is further increased. In an exemplary embodiment of the method, the method comprises retrieving roadwork information from said information tag, and communicating said roadwork information.

Such a method is advantageous, since the driver can be made aware of a road work and possible traffic disturbances due to the road work before driving into the road work area. Thus, the road safety and the safety for road workers can be increased.

According to another aspect of the invention, there is provided road side arrangement comprising a set of delineator posts, according the first aspect of the invention, and the embodiments thereof, spaced apart from each other along a road or highway. As a special aspect of the present invention, delineator posts of the intended kind are applicable on provisional seasonal ice-roads, on which by its nature of being able to provide advanced information in different aspects of road related issues, safety to these critical transport systems may be considerably increased.

In an exemplary embodiment, the road side arrangement comprises an active information tag having updatable information.

Herein, active is intended to mean that the unit which is referred to needs power supply for being operable. Such a road side arrangement is advantageous since it guarantees that the information of the information tag is correct and updated. An active information tag is advantageous, since it can provide information that is dynamic by nature and thus changes over time. Such an active information tag can also detect surrounding weather conditions or other useful information which can further increase the safety.

Further features of, and advantages with, the present invention will become apparent when studying the appended claims and the following description. The skilled addressee realizes that different features of the present invention may be combined to create embodiments other than those described in the following, without departing from the scope of the appended claims.

Brief Description of the Drawings

The various aspects of the invention, including its particular features and advantages, will be readily understood from the following detailed description and the accompanying drawings, in which:

> Fig. 1 is a schematic illustration of a delineator post according to the invention arranged vertically;
> Fig. 2 Illustrates an example of an information tag in form of a OR code; and

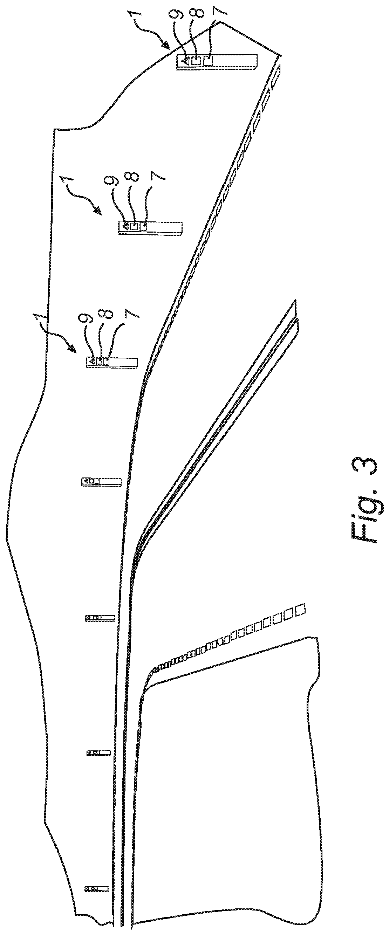

> Fig. 3 illustrates a set of delineator posts forming a road side/delimitation arrangement.

Detailed Description of Exemplary Embodiments

Throughout the whole description words as upper, lower, above, and below are intended to have their ordinary meaning when the delineator post is vertically arranged, that is, when the longitudinal extension of the delineator post is substantially vertical.

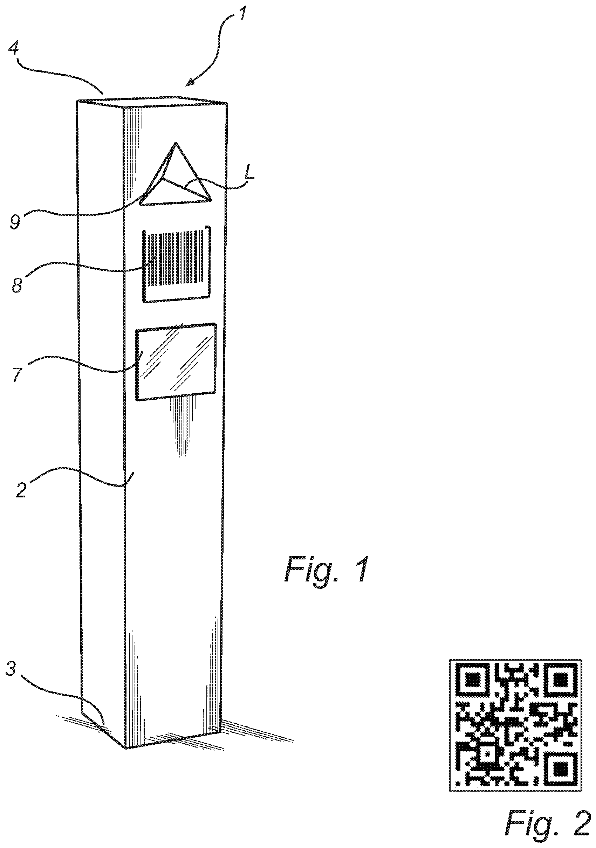

Fig. 1 illustrates a vertically arranged delineator post. The delineator post 1 comprises an elongate tube 2 having a bottom end 3, a top end 4, and an outer surface 5. The bottom end 3 of the tube 2 comprises means (not shown) for connecting the tube 2 to a base support such that the longitudinal extension of the tube 2 is in a vertical configuration. A top end portion 6 of the tube 2 comprises a reflector surface 7, an information tag 8, and a radar reflector 9 arranged on the outer surface 5. Thus, the reflector surface 7, the information tag 8, and the radar reflector 9 are arranged to be visible from an on board system, comprising both radar detector and vision system, when the delineator post 1 is arranged along a road or highway. In the embodiment in Fig. 1, the information tag 8 is separate from the reflector surface 7. Suitably, the information tag 8 is passive or static, i.e. does not require power supply, and arranged below the radar reflector 9. However, within the scope of the invention the information tag 8 and the radar reflector 9 may be arranged having any other predetermined relation, for instance as national law or standard provides.

The tube 2 may have a rectangular cross section as is illustrated in Fig. 1 or any other suitable cross-section, such as circular or elliptic. Alternatively, the cross section of the tube 2 may vary along its longitudinal extension.

The measures of the tube 2, such as height and width, and the position of the reflector surface 7 are adapted to national standards. In addition, the material of the tube 2 is adapted to such standards, for instance EN 12899-3:2007 "Fixed, vertical road traffic signs. Delineator posts and retroreflectors."

The information tag 8 can be in form of a conventional bar code, OR code, or in any other suitable form as long as the information tag is visible and readable from behind a wind screen of a passing vehicle. The information tag 8 can be applied to a road sign of sufficient size, which is attached to the delineator post 1.

In at least one embodiment, the information tag 8 is of a two dimensional type in form of a Micro OR code, provided by Denso Wave, see Fig. 2. A micro OR code is suitable, since it has a relatively small size. A Micro QR code with an error correction level L allows coding of 15 bit information into a 17x17 pixel matrix. The physical size of the pixel matrix is dependent on the quality of the vision system used, for instance in terms of amount of sensing pixels, sensing element size and focal length.

In order to provide readability of such a sign from behind a windscreen of a vehicle at a distance of at least 50 meters, the in the future vision system suitably comprises a state of the art image sensor in terms of, number of pixels, pixel size, sensing area size as well as adapted focal length. In other words, the image sensor suitably comprises approximately 20 megapixels and has a so called full frame sensor size resulting in a pixel dimension of 6 $\mu$m.

The entire information tag 8 including the code and demarcation area can be represented by an area of 0.2mx0.2m given a vision system with an image sensor size of 35mmx35mm and 14 Mega pixels. Since the development speed within the area of vision technology is relatively high, most likely, a QR code of reasonable size can be included into the traffic environment in the future. For an exemplary information tag 8 in form of a OR-code shown in Fig. 2, the sign area of 0.2mx0.2m is advantageously attached to the delineator post 1 or integrated together with the radar target to a common unit that can be retrofitted to a delineator post 1.

Generally, the state of the art two dimensional codes have redundancy so that a certain amount of occlusion of the code such as by snow, visual occlusion or graffiti can be allowed.

A Micro QR code is advantageous, since it has suitable redundancy and suitable number of storable bits. Naturally, there exist also other types of two dimensional codes that has suitable terms of redundancy and suitable number of bits that can be stored in such a code.

The information tag 8 can comprise different types of information, such as long range or short range curvature, shoulder geometry or restrictions due to traffic rules. For being able to retrieve the information of the information tag 8, a suitable standard for the information is established. That is, at least a part of each bar code or QR code corresponds to useful information according to a predetermined system. Since the radar reflector 9 allows for determining the position of the delineator post 1 with high precision, and since the position of the information tag 8 in relation to the radar reflector 9 is known, the position of the information tag 8 can be determined with high exactness. The position of the information tag 8 can be transmitted to the on board vision system of the vehicle. The knowledge of the position of the information tag 8 allows for using less computer capacity for retrieving and interpreting the information of the information tag 8, since in most cases only a part of the range of vision of the vision system comprises the desired information. Thus, by knowing the position of the information tag 8 within the range of vision of the vision system, the interesting part of the range of vision is also known and during image recognition only the interesting or desired part need to be decoded.

The decoding procedure of information from the information tag 8 including error checking is standardized, for instance for the case of a OR code and other standard codes. In the case of a bit coding, the bit stream is retrieved from the code. However, the exact meaning and interpretation of the bit stream is standardized so that desired information content can be retrieved from the bit stream. The following example illustrates the procedure. If it is desired to store road curvature information in the information tag 8, values for minimum and maximum curvature is determined, as well as resolution of the curvature that is to be represented. Thereafter, the curvature information can be coded into a bit sequence. Once the information tag 8 is retrieved by an onboard vision system, the curvature information can be retrieved from the information tag 8 by an onboard system using the standardized information decoding procedure. That is, knowledge of the exact coding of the curvature information allows the onboard system retrieve the stored curvature value. An information tag 8 used may in spite of being passive, still by the decoding system be seen as representing variable information, such as different kinds of warnings, provided to a vehicle from elsewhere, such as by radio (RDS=Radio Data System or GSM), GPS (Global Positioning System) or other intelligent means. By such a connection a specific set of information tags 8 may be used to geographically represent different kinds of messages, while still being passive, whereby the power for the intelligent parts is provided by the vehicle, since this is where the intelligence is located when the tags are used in this fashion.

In an alternative embodiment, the information tag 8 is active and comprises dynamic information. Such dynamic information is suitably information that changes over time, such as weather and climate information, presence of children proximate to a pedestrian crossing, presence and nature of road works, etc. A suitable way for presenting such dynamic information is trough variable-message signs, also denoted changeable-, electronic-, or dynamic message signs, which are frequently used on roadways to give travelers information about special events. Suitably, such an active information tag 8 comprises a detector for detecting the ambient conditions before the information of the information tag 8 is updated. Alternatively, the active information tag 8 can be updated by a suitable external device using conventional data transmission. The information of the information tag 8 can be updated or altered by road operators or authorities through their traffic management system. The exact nature of the active information tag 8 is dependent on the provided function. Different types of active information tags are further explained below in connection to the description of the method according to the invention.

Delineator posts 1 comprising active information tags 8 comprising dynamic information are advantageous, since they allow the information to be updated and consequently, it can be ensured that the information is correct.

The radar reflector 9 is arranged to provide a sufficient radar cross section in order to be identified from the on board radar system of the vehicle. The radar reflector 9 is in form of a so called corner reflector. In at least one embodiment, the corner reflector comprises three mutually perpendicular triangular flat portions. Suitably, the length of a side **L** of the corner reflector is 8-18 cm. However, the length **L** is dependent on the amount of emitted radar energy and frequency band. A suitable dimension of a corner reflector, i.e. the side length **L** can be calculated given a desired radar cross section (RCS), $\sigma$. The side length **L** of a corner reflector providing the same RCS as a vehicle, i.e. $\sigma = 100$, is:

$$L = \sqrt[4]{\frac{3\sigma}{4\pi}\lambda^2} = 14\,cm$$

For a 77 GHz radar, which is the frequency of a conventional radar of on board systems, $\lambda = 4$ mm. Naturally, the required dimensions can be smaller if a lower RCS is preferred. For instance, state of the art automotive radar systems are adapted to detect pedestrians, which exhibit an RCS of $\sigma = 1$. Using the above equation we obtain a corner reflector side length of L = 4.5 cm.

In at least one embodiment, the length of a side L of the corner reflector is approximately 14 cm for providing a suitable radar cross section to an on board radar system having approximately a frequency of 77 GHz, which is a band widely adopted in the automotive industry. However, within scope of the invention, the frequency can be in the range 70-85 GHz, or alternatively in the range 21-29 GHz.

The radar reflector 9 distinguishes and identifies the delineator post from other objects along the road side, such that a current vehicle position can be related laterally to the identified delineator post.

In use, a set of delineator posts 1 is arranged along a road or highway for demarking the edge of the road shoulders, as is illustrated in Fig. 2. Such a set forms a road side/delimitation arrangement according to the claims. The distance between a pair of delineator posts 1 is generally predetermined and adapted for instance to the maximum velocity of the road and the curvature. At straight portions without crossings the distance a suitable distance is approximately 100 m at highways and approximately 50 m at other ways. The road and the set of delineator posts 1 demarking the road shoulders forms together a road infrastructure according to the claims.

Further, the invention relates to a method for providing information to road trafficants. The method includes the steps of:

- providing a reflected radar signal from a radar reflector 9 arranged on a delineator post 1 indicating the position of a delineator post 1; and
- retrieving information from an information tag 8 positioned at a predetermined location in relation to said radar reflector 9.

The information can be in form of long range or short range curvature, shoulder geometry or restrictions due to traffic rules. The information can be retrieved and analyzed using an in-vehicle system or a separate device, such as a suitable mobile phone equipped with a video camera and image recognition software.

As is stated earlier, the information tag 8 can comprise different types of information. Consequently, there are different possible applications for the delineator posts 1 according to the invention. Therefore, the method according to the invention relates to different embodiments in which different types of information is used for different applications.

According to one embodiment of the method according to the invention, the information tag 8 may contain static curve radius information, which can be retrieved from the information tag 8 for determining an appropriate maximum speed for a vehicle at an on board electronic unit. Thereafter, a curve over speed warning can be generated in the event a present speed of the vehicle is greater than said maximum speed. The appropriate maximum speed can be adjusted to prevailing weather circumstances by combining the curve radius information with dynamic weather and climate information.

Alternatively, the information tag 8 may contain static or dynamic lane access information, which can be retrieved from the information tag 8. In such a case, the method relates to generating a lane access warning, if entry into a neighbouring lane is prohibited. Static lane access information can be combined with dynamic information regarding oncoming traffic. Oncoming traffic occupying an adjacent lane is detected by a active information tag 8 and a lane access warning is generated, if entry into a neighbouring lane is prohibited. Such a method is useful at road work areas, if only one lane is accessible allowing traffic only in one direction.

Still alternatively, the information tag 8 may contain passive road shoulder information, which can be retrieved from the information tag 8. In such a case, the method relates to communicating type and dimensions of the road shoulder, the presence of infrastructure support and the type of terrain outside the shoulder are. Such information can be used in a Roadway Departure Avoidance (RDA) function for maintaining a safe position on the roadway in the occasion of the roadway departure. A roadway departure is distinguished from a lane departure through passive information obtained from the information tag 8.

Furthermore, delineator posts 1 according to the invention allows for enhancement of detection of vehicle lane position. In such a case, the information tag 8 comprises at least information about the lateral distance of the delineator post to the lane marking, i.e. the static road shoulder width. By distinguishing and identifying the delineator post 1 from other objects along the road side, the radar reflector 9 can be used to relate the vehicle position laterally in relation to the recently identified post. Using static road shoulder information and lane dimension information retrieved from the information tag 8 together with the position of the vehicle in relation to the recently identified delineator post 1, the vehicle position can be obtained.

Still alternatively, the information tag 8 may contain road work information, which can be retrieved from the information tag 8. In such a case, the method relates to communicating the road work information. The road work information is in form of existing road works and/or scenarios the driver can expect to happen, such as suddenly appearing trucks, road workers in the lane, dirt and soiling, spray, temporary speed limits, lane width, etc. The information tag 8 can be passive, comprising a number of predefined scenarios, or active and updated for instance by the road works company. Further, the information can generate automatic speed reduction of the vehicle. Thus improving the working environment of the road workers.

Still alternatively, the information tag 8 can be active retrieving information regarding concealed traffic congestions in highway curves. Such information can be used for generating a traffic congestion warning.

Still alternatively, the information tag 8 can be active comprising a detector detecting children, wheel chaired persons or the like. A delineator post comprising such an information tag 8 arranged in the proximity of a pedestrian crossing is suitable for a method for generating a warning regarding children crossing the street. The children are detected by an active information tag 8 and their presence is communicated to the vehicle by the active information tag 8.

Within the scope of the invention still other applications are possible. For instance, the delineator posts 1 can be used as road toll payment support. In such an application an in vehicle device, such as a smart phone, keeps track of road tolls, organizes and/or reminds for payment according to the toll provided.

Even though the invention has been described with reference to specific exemplifying embodiments thereof, many different alterations, modifications and the like will become apparent for those skilled in the art. For example the delineator post and the reflector may be formed in one piece. In addition, the features of the different embodiments can be combined, such that the information tag 8 comprises both static and dynamic information. In addition the information tag 8 of a delineator post 1 according to the invention can comprise two or several types of information described above in relation to the different embodiments. For instance, the information tag 8 of the delineator post 1 according to the invention can comprise curve radius information, information regarding road works and traffic congestion information.

Additionally, variations to the disclosed embodiments can be understood and effected by the skilled addressee in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims.

**Claims**

1. A delineator post (1) to be used in a substantially upright position arranged at predetermined distances along edges of a road roads or highway, which delineator post (1) comprises comprise a reflector surface (7) for reflecting visible light from oncoming passing vehicles and an information tag (8) adapted to be visible for an onboard vision system of such passing vehicles, **characterized in that** the reflector surface (7) and the information tag (8) are arranged together with a radar reflector (9) on the outer surface of the top end of the delineator post (1), facing passing vehicles and **in that** the radar reflector (9) on said surface facing oncoming passing vehicles is in form of a corner reflector disposed at a predetermined position in relation to the tag (8), this position to be known to said onboard vision system.

2. Delineator post (1) according to claim 1, **characterized in that** the information tag (8) is separate from the reflector surface (7).

3. Delineator post (1) according to anyone of the previous claims, **characterized in that** the information tag (8) thereon is passive.

4. A method for providing information to road trafficants including, providing delineator posts (1) according to any of claims 1-3 in a substantially upright position along edges of a road highway.

5. Method for providing information to road trafficants according to claim 4, **characterized in that** said road information is in the form of long range or short range curvature, shoulder geometry or restrictions due to traffic rules.

6. Method for providing information to road trafficants according to claim 5, **characterized by** retrieving curve radius information from said information tag (8), determining an appropriate maximum speed for a vehicle at an on board electronic unit, and generating a curve over speed warning in the event a present speed of the vehicle is greater that said maximum speed.

7. Method for providing information to road trafficants according to claim 5, **characterized by** retrieving lane access information from said information tag (8) and generating a lane access warning in the event entry into a neighbouring lane is prohibited.

8. Method for providing information to road trafficants according to claim 5, **characterized by** retrieving road shoulder information from said information tag (8) and communicating type and dimensions of the road shoulder, the presence of infrastructure support and the type of terrain outside the shoulder.

9. Method for providing information to road trafficants according to claim 5, **characterized by** retrieving roadwork information from said information tag (8) and communicating said roadwork information.

10. A road side arrangement comprising, a set of delineator posts (1) according to claims 1-3, arranged spaced apart from each other along a road or highway.

11. Road side arrangement according to claim 10, the road side arrangement further comprising an active information tag (8), having/representing updateable information.

**Patentansprüche**

1. Leitpfosten (1), der in einer im Wesentlichen aufrechten Position verwendbar in vorbestimmten Abständen entlang von Straßen- oder Autobahnrändern angeordnet ist, wobei der Leitpfosten (1) eine Reflektorfläche (7) zum Reflektieren von sichtbarem Licht von vorbeifahrenden Fahrzeugen und ein Informationstag (8), das geeignet ist, für ein fahrzeugeigenes Sichtsystem von solchen vorbeifahrenden Fahrzeugen sichtbar zu sein, umfasst, **dadurch gekennzeichnet, dass** die Reflektorfläche (7) und das Informationstag (8) zusammen mit einem Radarreflektor (9) auf der Außenfläche des oberen Endes des Leitpfostens (1), welche den vorbeifahrenden Fahrzeugen zugewandt ist, angeordnet sind und dass der Radarreflektor (9) auf der Außenfläche, welche den vorbeifahrenden Fahrzeugen zugewandt ist, in Form eines an einer vorbestimmten Position in Bezug auf das Tag (8) angeordneten Winkelreflektors ausgebildet ist, wobei diese Position dem fahrzeugeigenen Sichtsystem bekannt ist.

2. Leitpfosten (1) nach Anspruch 1, **dadurch gekennzeichnet, dass** das Informationstag (8) von der Reflektorfläche (7) separat ist.

3. Leitpfosten (1) nach einem der vorhergehenden Ansprüche, **dadurch gekennzeichnet, dass** das Informationstag (8) darauf passiv ist.

**4.** Verfahren zum Bereitstellen von Informationen an Verkehrsteilnehmer einschließlich, bei welchem Leitpfosten (1) nach einem der Ansprüche 1 bis 3 in einer im Wesentlichen aufrechten Position entlang von Straßen- oder Autobahnrändern bereitgestellt werden.

**5.** Verfahren zum Bereitstellen von Informationen an Verkehrsteilnehmer nach Anspruch 4, **dadurch gekennzeichnet, dass** die Straßeninformationen in Form einer langen oder kurzen Krümmung, einer Seitenrandgeometrie oder von Verkehrsregelbeschränkungen vorliegen.

**6.** Verfahren zum Bereitstellen von Informationen an Verkehrsteilnehmer nach Anspruch 5, **gekennzeichnet durch** ein Abfragen von Kurvenradiusinformationen von dem Informationstag (8), ein Bestimmen einer geeigneten Maximalgeschwindigkeit für ein Fahrzeug in einer fahrzeugeigenen Elektronikeinheit und ein Erzeugen eines Warnhinweises für eine Kurvengeschwindigkeitsüberschreitung in dem Fall, dass eine tatsächliche Geschwindigkeit des Fahrzeuges größer als die Maximalgeschwindigkeit ist.

**7.** Verfahren zum Bereitstellen von Informationen an Verkehrsteilnehmer nach Anspruch 5, **gekennzeichnet durch** ein Abfragen von Fahrbahnzufahrtsinformationen von dem Informationstag (8) und ein Erzeugen eines Warnhinweises für eine Fahrbahnzufahrt in dem Fall, dass eine Einfahrt in eine einmündende Fahrbahn verboten ist.

**8.** Verfahren zum Bereitstellen von Informationen an Verkehrsteilnehmer nach Anspruch 5, **gekennzeichnet durch** ein Abfragen von Straßenbankettinformationen von dem Informationstag (8) und ein Kommunizieren von Beschaffenheit und Abmessungen des Straßenbanketts, der Anwesenheit von Infrastrukturmaßnahmen und der Beschaffenheit des Geländes außerhalb des Banketts.

**9.** Verfahren zum Bereitstellen von Informationen an Verkehrsteilnehmer nach Anspruch 5, **gekennzeichnet durch** ein Abfragen von Straßenbauarbeiteninformationen von dem Informationstag (8) und ein Kommunizieren der Straßenbauarbeiteninformationen.

**10.** Eine Straßenseitenanordnung umfassend einen Satz von Leitpfosten (1) nach einem der Ansprüche 1 bis 3, die entlang einer Straße oder einer Autobahn voneinander beabstandet angeordnet sind.

**11.** Straßenseitenanordnung nach Anspruch 10, wobei die Straßenseitenanordnung weiter ein aktives Informationstag (8) umfasst, das aktualisierbare Informationen aufweist/ darstellt.

**Revendications**

**1.** Poteau délinéateur (1) à utiliser dans une position sensiblement verticale, disposé à des distances prédéterminées le long de bords d'une route ou d'une autoroute, ledit poteau délinéateur (1) comprenant une surface réfléchissante (7) servant à réfléchir de la lumière visible de véhicules en circulation et une étiquette d'informations (8) conçue pour être visible par un système de vision embarqué desdits véhicules en circulation, **caractérisé en ce que** la surface réfléchissante (7) et l'étiquette d'informations (8) sont disposées conjointement avec un réflecteur radar (9) sur la surface extérieure de l'extrémité supérieure du poteau délinéateur (1), orientée vers des véhicules en circulation, et **en ce que** le réflecteur radar (9) situé sur ladite surface orientée vers des véhicules en circulation se présente sous forme d'un réflecteur polyédrique disposé à une position prédéterminée par rapport à l'étiquette (8), ladite position devant être connue dudit système de vision embarqué.

**2.** Poteau délinéateur (1) selon la revendication 1, **caractérisé en ce que** l'étiquette d'informations (8) est distincte de la surface réfléchissante (7).

**3.** Poteau délinéateur (1) selon l'une quelconque des revendications précédentes, **caractérisé en ce que** l'étiquette d'informations (8) située sur ce dernier est passive.

**4.** Procédé de fourniture d'informations à des usagers de la route, consistant à disposer des poteaux délinéateurs (1) selon l'une quelconque des revendications 1 à 3 dans une position sensiblement verticale le long de bords d'une route ou d'une autoroute.

**5.** Procédé de fourniture d'informations à des usagers de la route selon la revendication 4, **caractérisé en ce que** lesdites informations routières sont sous la forme d'une courbure de longue distance ou de courte distance, d'une géométrie d'accotement ou de restrictions associées à des règles de circulation.

**6.** Procédé de fourniture d'informations à des usagers de la route selon la revendication 5, **caractérisé par** une extraction d'informations de rayon de courbure de ladite étiquette d'informations (8), une détermination d'une vitesse maximale appropriée d'un véhicule au niveau d'une unité électronique embarquée, et une génération d'un avertissement de vitesse de parcours de courbe dans l'éventualité où une vitesse courante du véhicule est supérieure à ladite vitesse maximale.

**7.** Procédé de fourniture d'informations à des usagers de la route selon la revendication 5, **caractérisé par** une extraction d'informations d'accès à une voie de ladite étiquette d'informations (8) et une génération d'un avertissement d'accès à une voie dans l'éventualité où une entrée de circulation sur une voie voisine est interdite.

**8.** Procédé de fourniture d'informations à des usagers de la route selon la revendication 5, **caractérisé par** une extraction d'informations d'accotement de route de ladite étiquette d'informations (8) et une communication du type et des dimensions de l'accotement de route, de la présence d'un support d'infrastructure et du type de terrain à l'extérieur de l'accotement.

**9.** Procédé de fourniture d'informations à des usagers de la route selon la revendication 5, **caractérisé par** une extraction d'informations de travaux routiers de ladite étiquette d'informations (8) et une communication desdites informations de travaux routiers.

**10.** Agencement de bord de route comprenant un ensemble de poteaux délinéateurs (1) selon les revendications 1 à 3, disposés espacés les uns des autres le long d'une route ou d'une autoroute.

**11.** Agencement de bord de route selon la revendication 10, l'agencement de bord de route comprenant en outre une étiquette d'informations active (8) possédant/représentant des informations pouvant être mises à jour.

*Fig. 1*

*Fig. 2*

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010063058 A
- WO 9960544 A, Baldinotti

- DE 19915870, Plaetschke